# EUROPEAN PATENT APPLICATION

(11) **EP 2 605 334 A2**
(43) Date of publication of application: **19.06.2013**
(21) Application number: 13001046.5
(22) Date of filing: 06.10.2011
(51) Int. Cl.: H01R 4/30, H01R 4/34, H01R 9/24

(54) **Terminal block, method of manufacturing it and nut**

(30) Priority: 20.01.2011 JP 2011010058
(62) Divisional of application: 11008112.2
(71) Applicant: Sumitomo Wiring Systems, Ltd., Yokkaichi City Mie 510 (JP)
(72) Inventor: Akuta, Daisuke, Yokkaichi-City, MIE, 510-8503 (JP)
(74) Representative: Müller-Boré & Partner Patentanwälte

(57) **Abstract**

The invention relates to a terminal block for fastening conductors by placing the conductors one above another and fastening bolts, comprising a plurality of nuts (10) on which the conductors are to be placed and a partition wall (24) partitioning between the nuts (10) adjacent to each other, wherein the partition wall (24) extends in a direction crossing an arrangement direction of the nuts (10) and includes
an insulation wall made of primary molding resin, located at least in a range in a vertical direction from the lower surfaces of the nuts (10) to the upper surfaces of the bolts to be fastened to the nuts (10) and insulating between the adjacent nuts (10), and
a secondary molding portion (60) made of secondary molding resin, filling up clearances between the insulation wall and the nuts (10) and at least partly covering the side surface of the insulation wall.

## Description

The present invention relates to a terminal block, a method of manufacturing or producing it and a nut.

Conventionally, a terminal block disclosed in Japanese Unexamined Patent Publication No. 2008-98007 is known as the one for electrically connecting conductors such as busbars extending from electrical devices such as a motor and an inverter. This terminal block electrically connects the conductors by placing the conductors of the respective electrical devices one above another on a terminal block main body including metal nuts inside by insert molding and fastening the conductors by tightening bolts and the nuts.

Since the electrical devices generally have high heat generation amounts and the conductors become hot, a metal heat sink is arranged below the nuts via an insulating member in the form of a flat plate made of synthetic resin and heat transferred from the conductors to the nuts is transferred to the heat sink via the insulating member and radiated from the heat sink in this terminal block. This terminal block is so formed that fastening surfaces, on which the conductors to be placed, are not covered by resin by pressing the entire fastening surfaces from above by a mold to prevent the resin from covering the fastening surfaces (hereinafter, this is referred to as "resin cut-off' and a part for cutting off the resin in the mold is referred to as a resin cut-off part) in insert molding with the nuts as inserts.

If insert molding is performed with the entire fastening surfaces pressed by the resin cut-off parts, pressing forces of the resin cut-off parts are distributed over the entire fastening surfaces to reduce contact pressures of the resin cut-off parts acting on the fastening surfaces, whereby small clearances may be formed at parts of boundaries between the resin cut-off parts and the fastening surfaces. If the clearances are formed, the resin flows into these clearances and is cured there and the conductors and the nuts cannot be held in direct contact due to the presence of resin films formed on the fastening surfaces. Then, heat-transfer efficiency from the conductors to the nuts is reduced, with the result that heat radiation performance of the conductors and the terminal block is reduced. If the pressing forces of the resin cut-off parts are increased to reliably cut off the resin as a countermeasure, the insulating member may be squeezed to be fractured or the fastening surfaces may be damaged to reduce contact areas with the busbars.

The present invention was completed in view of the above situation and an object thereof is to improve heat radiation performance of a terminal block.

This object is solved according to the invention by the features of the independent claims. Preferred embodiments of the invention are subject of the dependent claims.

Accordingly, a resin film is prevented from being formed on a fastening surface of a nut by reliably cutting off resin and ensure adhesion between the nut and conductors, thereby improving heat radiation performance of a terminal block.

According to one aspect of the invention, there is provided a terminal block in which a plurality of conductors extending from one or more devices are to be placed one over another and fastened by a bolt, comprising: at least one nut with at least one stepped portion formed at an outer peripheral part of a fastening surface, on which the conductors are to be placed, and recessed toward a side opposite to the conductors; at least one heat sink arranged on a side of the nut opposite to the fastening surface; at least one insulating plate sandwiched in close contact between the nut and the heat sink and adapted to transfer heat of the conductors from the nut to the heat sink; and a molded resin part by which the nut, the insulating plate and the heat sink are integrally formed; wherein: the stepped portion is pressed by at least one resin cut-off part provided in a mold for forming the molded resin part when the molded resin part is formed; and a restricted surface substantially flush with a press surface to be pressed by the resin cut-off part and continuous with an outer peripheral side of the press surface on the stepped portion is covered by the molded resin part.

The present invention is preferably embodied to have the following constructions.

The stepped portion may be formed at an outer peripheral part of the fastening surface over the entire periphery.

The stepped portion may be pressed over the entire periphery by the at least one resin cut-off part.

According to another particular embodiment, there is provided a terminal block in which a plurality of conductors extending from devices are placed one over another and fastened by a bolt, comprising a nut with a stepped portion formed at an outer peripheral part of a fastening surface, on which the conductors are to be placed, over the entire periphery and recessed toward a side opposite to the conductors; a heat sink arranged on a side of the nut opposite to the fastening surface; an insulating plate sandwiched in close contact between the nut and the heat sink and adapted to transfer heat of the conductors from the nut to the heat sink; and a molded resin part by which the nut, the insulating plate and the heat sink are integrally formed; wherein the stepped portion is pressed over the entire periphery by a resin cut-off part provided in a mold for forming the molded resin part when the molded resin part is formed; and a restricted surface flush with a press surface to be pressed by the resin cut-off part and continuous with an outer peripheral side of the press surface on the stepped portion is covered by the molded resin part.

According to the thus constructed terminal block, a contact pressure of the resin cut-off part acting on the stepped portion can be increased without increasing a pressing force of the resin cut-off part since the molded resin part is formed with the stepped portion of the nut pressed over the entire periphery by the resin cut-off part. This enables resin to be reliably cut off at a boundary part between the resin cut-off part and the stepped portion and adherence of the molding resin to the fastening surface of the nut to be prevented.

Further, since the resin is cut off at the stepped portion recessed from the fastening surface of the nut toward the side opposite to the conductors, there is no likelihood of damaging the fastening surface to reduce a contact area with the conductors. Further, even if a small clearance is formed between the resin cut-off part and the stepped portion due to a processing error of the nut and the resin flows into this clearance, the resin can be prevented from easily flowing to the fastening surface of the nut since the stepped portion is recessed from the fastening surface toward the side opposite to the conductors and formed at a different height position. In this way, it is possible in the present invention to prevent formation of a resin film on the fastening surface of the nut and improve heat radiation performance of busbars and the terminal block by efficiently transferring heat of the busbars to the nut.

Further, since the restricted surface on the stepped portion is covered by the molded resin part, the nut can be prevented from being pulled toward the bolt, thereby preventing an air layer having lower thermal conductivity than metals and synthetic resins from being formed between the nut and the insulating plate, when the bolt is tightened into the nut. In this way, the nut and the insulating plate are held in close contact and heat easily escapes from the nut to the heat sink via the insulating plate, whereby heat-transfer performance of the terminal block can be improved.

Further, since the restricted surface continuous and flush with the outer peripheral side of the press surface on the stepped portion is covered by the molded resin part, the shape of the nut can be simplified as compared with the case where the press surface and the restricted surface are respectively formed at different height positions.

The molded resin part may include an upper covering portion which covers the restricted surface of the stepped portion from above, and/or a lower covering portion which covers a lower end portion of the heat sink from below, and/or particularly a side wall portion connecting the upper and lower covering portions.

The nut, the insulating plate and the heat sink may be vertically sandwiched from opposite sides by the upper and lower covering portions while being respectively held in close contact.

According to this construction, the molded resin part covers the upper surface of the nut and the lower surface of the heat sink. This can prevent an upward movement of the molded resin part together with the nut being pulled toward the bolt and hold the nut, the insulating plate and the heat sink in close contact.

The stepped portion may be so provided as to be able to come into surface contact with the resin cut-off part of the mold.

According to this construction, the resin can be reliably cut off by the stepped portion and the resin cut-off part when the molded resin part is formed. This can prevent formation of a resin film on the upper surface of the nut and hold the conductors in close contact with the nut.

The resin cut-off part may have a horizontal leading end surface at an angle different from 0° or 180°, preferably substantially perpendicular to a mold opening direction of the mold.

The upper surface of the stepped portion may be a horizontal surface which comes into surface contact with the leading end surface of the resin cut-off part; and/or a clearance may be formed between a side surface of the resin cut-off part and a side surface of the nut with the leading end surface held in contact, preferably in surface contact, with the press surface of the stepped portion.

If the leading end surface of the resin cut-off part and the upper surface of the stepped portion are oblique surfaces, they may not be able to come into surface contact with each other when the nut is displaced even to a small extent. In this respect, according to the above construction, the leading end surface of the resin cut-off part can be brought into surface contact with the upper surface of the stepped portion of the nut and the resin can be reliably cut off even if the nut is slightly horizontally displaced.

According to another aspect of the invention, there is also provided a nut, in particular for use with the terminal block according to the preceding aspect or a particular embodiment thereof, on which a plurality of conductors extending from devices are to be placed and into which a bolt is to be tightened in a terminal block in which the conductors are placed one over another and fastened by the bolt, **characterized in that** a stepped portion recessed toward a side opposite to the conductors is formed at an outer peripheral edge part of a fastening surface to which the conductors are to be fastened.

According to the thus constructed nut, the nut can be prevented from being pulled toward the bolt by covering a surface on the stopped portion at the side of the conductors by a molded resin part. Further, by pressing this stepped portion by a resin cut-off part, resin can be reliably cut off when the nut and the molded resin part are integrally formed.

According to another aspect of the invention, there is also provided method of manufacturing or producing a terminal block, in particular for use with the terminal block according to the above aspect or a particular embodiment thereof, in which a plurality of conductors extending from one or more devices are to be placed one over another and fastened by a bolt, comprising the following steps: providing at least one nut with at least one stepped portion formed at an outer peripheral part of a fastening surface, on which the conductors are to be placed, and recessed toward a side opposite to the conductors; arranging at least one heat sink on a side of the nut opposite to the fastening surface; sandwiching at least one insulating plate in close contact between the nut and the heat sink so that the insulating plate is adapted to transfer heat of the conductors from the nut to the heat sink; and integrally forming the nut, the insulating plate and the heat sink into a molded resin part by; pressing the stepped portion by at least one resin cut-off part provided in a mold for forming the molded resin part when the molded resin part is formed; and covering by the molded resin part a restricted surface substantially flush with a press surface pressed by the resin cut-off part and continuous with an outer peripheral side of the press surface on the stepped portion.

The present invention is preferably embodied as follows:

The stepped portion may be formed at an outer peripheral part of the fastening surface over the entire periphery, and the stepped portion preferably may be pressed over the entire periphery by the at least one resin cut-off part.

The molding step of molding the molded resin part may include forming: an upper covering portion which covers the restricted surface of the stepped portion from above, and/or a lower covering portion which covers a lower end portion of the heat sink from below, and/or a side wall portion connecting the upper and lower covering portions.

The nut, the insulating plate and the heat sink may be vertically sandwiched from opposite sides by the upper and lower covering portions while being respectively held in close contact.

The stepped portion may be brought into surface contact with the resin cut-off part of the mold.

The resin cut-off part may have a horizontal leading end surface at an angle different from 0° or 180°, preferably substantially perpendicular to a mold opening direction of the mold and the press surface of the stepped portion may be a horizontal surface which comes into surface contact with the leading end surface of the resin cut-off part; and/or a clearance may be formed between a side surface of the resin cut-off part and a side surface of the nut with the leading end surface held in contact, preferably in surface contact, with the press surface of the stepped portion.

According to the above, it is possible to prevent a resin film from being formed on a fastening surface of a nut by reliably cutting off resin and ensure adhesion between the nut and conductors, thereby improving heat radiation performance of a terminal block.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view of a terminal block,
FIG. 2 is a plan view of the terminal block,
FIG. 3 is a rear view of the terminal block,
FIG. 4 is a bottom view of the terminal block,
FIG. 5 is a section along V-V of FIG. 2,
FIG. 6 is a section along VI-VI of FIG. 2,
FIG. 7 is a plan view of a nut,
FIG. 8 is a plan view of an insulating plate,
FIG. 9 is a rear view of the insulating plate,
FIG. 10 is a bottom view of the insulating plate,
FIG. 11 is a plan view of a heat sink,
FIG. 12 is a bottom view of the heat sink,
FIG. 13 is a side view showing a state before the nuts, the insulating plate and the heat sink are assembled,
FIG. 14 is a plan view showing a state after the nuts, the insulating plate and the heat sink are assembled,
FIG. 15 is a section along XV-XV of FIG. 14,
FIG. 16 is a section showing a state where a terminal block is molded in first and second block molds,
FIG. 17 is a perspective view with a section showing a state where the insulating plate is separated from the first and second molds,
FIG. 18 is a section showing a state where nut accommodating recesses are fitted to the first mold,
FIG. 19 is a section showing the insulating plate is separated from the first mold, and
FIG. 20 is an enlarged section showing a state where a resin cut-off part in the first mold of FIG. 16 is pressing a press surface of a stepped portion.

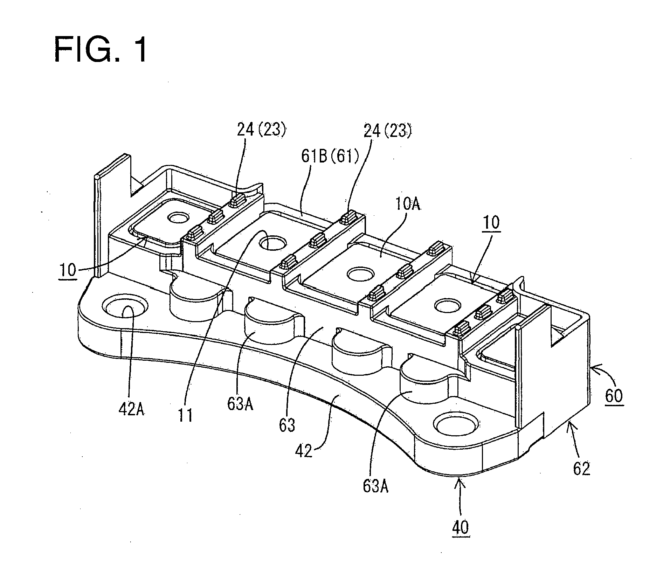

One particular embodiment of the present invention is described with reference to FIGS. 1 to 20.

In this embodiment is illustrated a terminal block which is mounted in a motor case to be installed in a vehicle such as an electric vehicle or a hybrid vehicle and is provided to electrically connect a busbar of a first electric equipment such as a electric motor (e.g. a three-pole busbar provided in a three-phase alternating current motor) and a busbar of a second electric equipment such as an inverter (e.g. a three-pole busbar provided in an inverter).

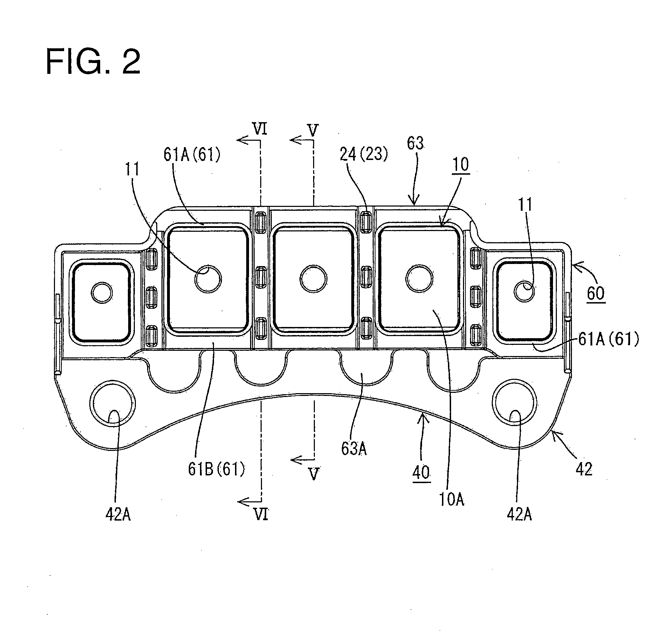

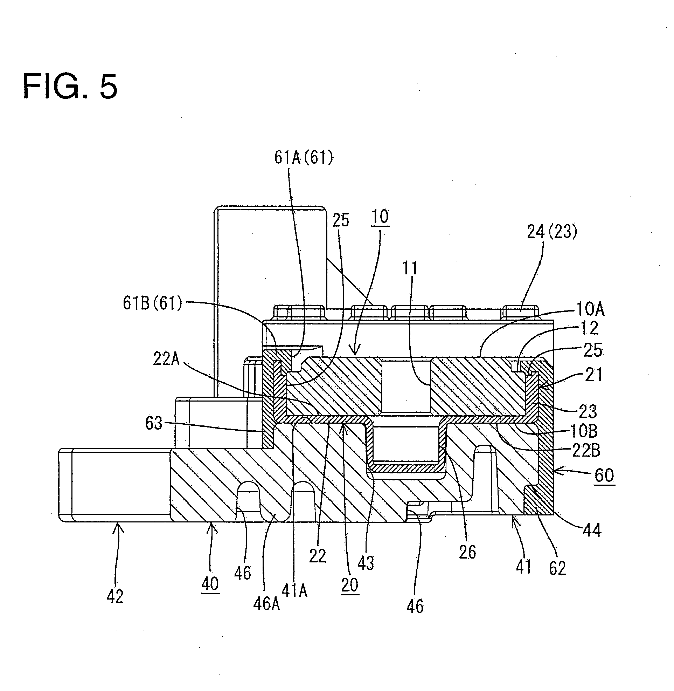

The terminal block includes one or more nuts 10 on which unillustrated busbars extending from electrical devices are to be placed, at least one heat sink 40 arranged adjacent to the nut(s) 10, particularly below the lower surfaces of the nuts 10 substantially opposite to the upper surfaces on which the busbars are to be placed, at least one insulating plate or element 20 vertically sandwiched between the nuts 10 and the heat sink 40 and at least one molded resin part 60 made e.g. of synthetic resin and at least partly covering these three members 10, 40 and 20. In the following description, a vertical direction is based on a vertical direction in FIG. 5 and a lateral direction is based on a lateral direction in FIG. 2.

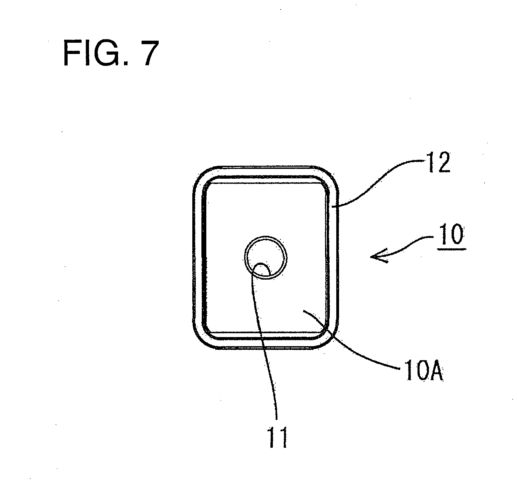

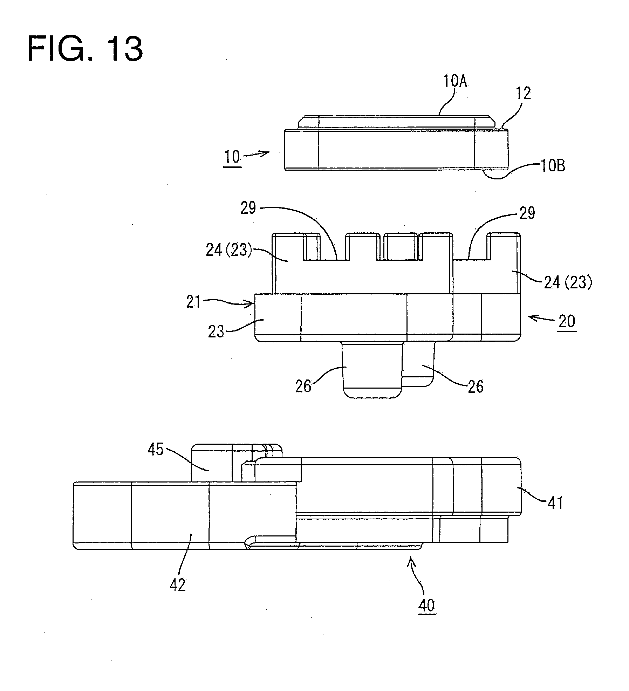

Each nut 10 particularly substantially is in the form of a metal block and, as shown in FIGS. 7 and 13, has a substantially rectangular or polygonal plan view with (e.g. four) rounded corners. A bolt tightening hole 11 penetrating in a vertical direction (direction at an angle different from 0° or 180°, preferably substantially perpendicular to both fastening surfaces 10A, 10B) is provided substantially in a central part of the nut 10. After a plurality of unillustrated busbars are to be placed on the upper fastening surface 10A of the nut 10, an unillustrated bolt is screwed to or into the bolt tightening hole 11 to electrically conductively connect the busbars.

A stepped or lowered portion 12 at least partly is formed on the outer peripheral edge of an upper end portion of the nut 10. This stepped or lowered portion 12 is formed to be slightly lower than the upper fastening surface 10A of the nut 10 as shown in FIG. 5. The stepped portion 12 particularly substantially is provided over the entire outer peripheral edge of the nut 10 and/or parallel to the upper and/or lower fastening surfaces 10A, 10B of the nut 10. Note that the upper and lower fastening surfaces 10A, 10B and the stepped portion 12 of the nut 10 particularly are flat without irregularity.

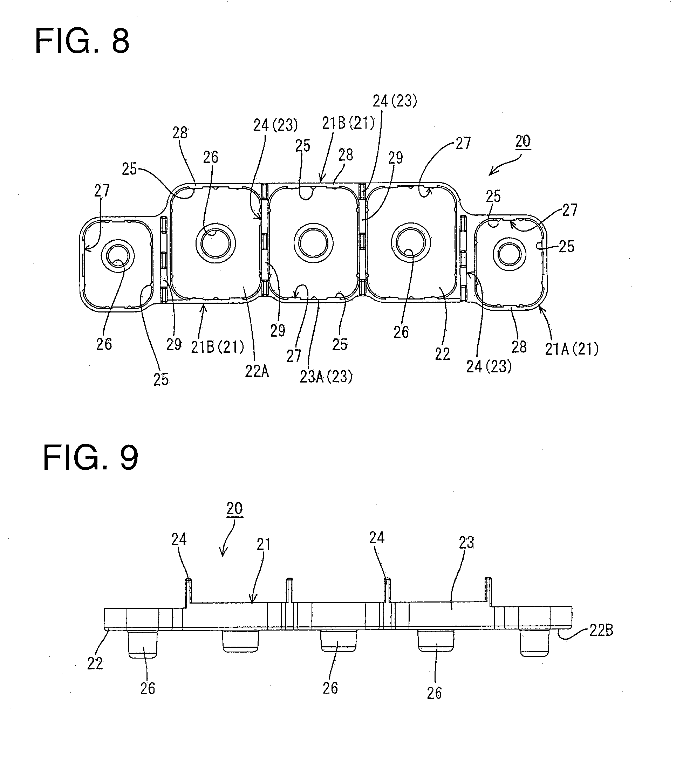

The insulating plate 20 is made of an insulating material such as synthetic resin and, as shown in FIG. 8, long in the lateral direction. This insulating plate 20 functions to transfer heat of the busbars placed on the nuts 10 from the nuts 10 to the heat sink 40 located below the nuts 10. Note that the synthetic resin used here particularly has a content of glass and talc between about 50% and 75% (e.g. of about 66 %) and/or thermal conductivity is higher than synthetic resin having a content of glass and talc of about 33 %. This enables heat to be efficiently transferred from the nuts 10 to the heat sink 40.

The insulating plate 20 includes one or more, particularly a plurality of (five in this embodiment) nut accommodating recesses 21 capable of at least partly accommodating the respective nuts 10 and particularly substantially arranged side by side in the lateral direction.

As shown in FIG. 5, each nut accommodating recess 21 includes a bottom or base plate 22 with which the lower fastening surface 10B of the nut 10 can be substantially held or positioned in close contact, and a surrounding wall 23 standing upward or projecting from the bottom plate 22 to surround side surfaces of the nut 10 over at least part of the periphery, particularly over the substantially entire periphery. Accordingly, the nut accommodating recess 21 has an open upper end and this upper end opening has a rectangular or polygonal shape with (e.g. four) rounded corners. The respective nut accommodating recesses 21 particularly are so substantially formed side by side that longer sides thereof are adjacent to each other. Out of the nut accommodating recesses 21, those located at the opposite sides in the lateral direction particularly are smaller nut accommodating recesses 21A and one size smaller than three larger nut accommodating recesses 21B located in a central or intermediate part.

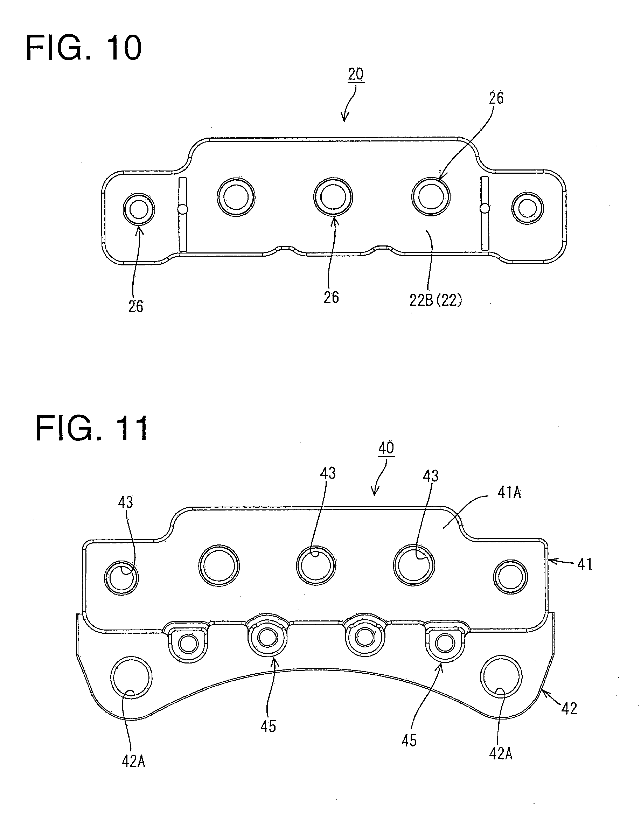

As shown in FIG. 10, particularly one unitary bottom plate 22 common to all the nut accommodating recesses 21 is provided, and both upper and lower surfaces 22A, 22B of the bottom plate 22 are formed to be flat. This enables the upper surface 22A of the bottom plate 22 in the respective nut accommodating recesses 21 and the lower fastening surfaces 10B of the nuts 10 to be closely held in contact without any clearances with the nuts 10 at least partly accommodated in the nut accommodating recesses 21 as shown in FIG. 5. In this way, heat can be efficiently transferred from the nuts 10 to the bottom plate 22.

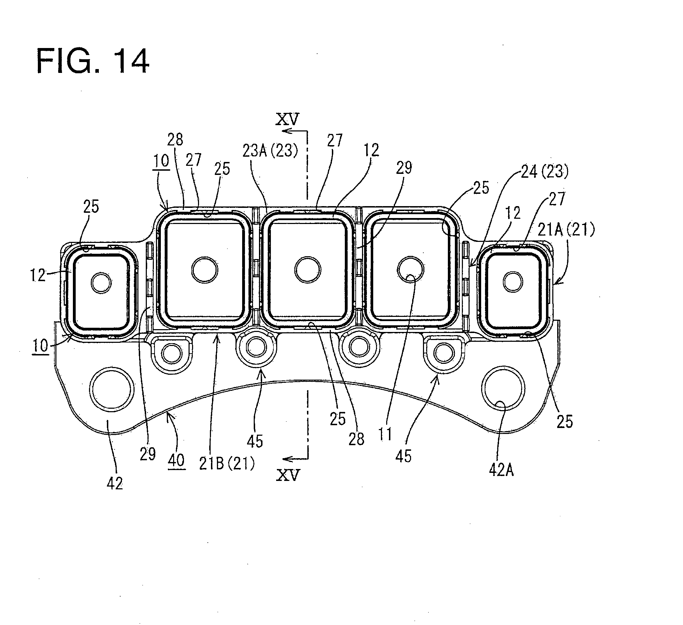

As shown in FIG. 8, the inner peripheral shapes of the surrounding walls 23 particularly have substantially rectangular or polygonal shapes and substantially conform to the outer peripheral shapes of the nuts 10. Further, the inner peripheral shapes of the surrounding walls 23 particularly are set to be slightly larger than the outer peripheral shapes of the nuts 10, and/or the nuts 10 particularly are at least partly accommodated with small clearances formed between the inner peripheral surfaces of the surrounding walls 23 and the side surfaces of the nut 10 in a state where the nuts 10 are accommodated in the nut accommodating recesses 21 as shown in FIG. 14. In this way, the respective nuts 10 are at least partly accommodated in the respective nut accommodating recesses 21 to be positioned.

Further, the surrounding wall 23 located between the adjacent nut accommodating recesses 21 particularly is the one common to the both nut accommodating recesses 21 and particularly serves as a partition wall 24 partitioning between the two nuts 10 accommodated in the both nut accommodating recesses 21. Further, out of the surrounding wall 23, a part other than the partition wall 24 particularly serves as an outer surrounding wall 23A. As shown in FIG. 9, the height of the partition wall 24 particularly is set to be about twice the height of the outer surrounding walls 23A to ensure a creepage distance between the two adjacent nuts 10. Since the partition wall(s) 24 is/are set to be located higher than the busbars placed on the upper fastening surfaces 10A of the nuts 10, the busbars particularly are prevented from coming into contact with each other to be short-circuited due to lateral movements of the busbars placed on the nuts 10.

Further, as shown in FIG. 8, one or more pressing projections 27 (particularly substantially having a rectangular or polygonal plan view) are formed to project from the respective inner peripheral surface(s) of the outer surrounding wall(s) 23A.

Particularly, one pressing projection 27 is provided on the inner peripheral surface of the (particularly each) shorter side of the surrounding wall 23 of the (particularly each) smaller nut accommodating recess 21A and/or one or more (e.g. two) pressing projections 27 are provided on the inner peripheral surface of the outer longer side of the surrounding wall 23 of the (particularly each) smaller nut accommodating recess 21A and/or the inner peripheral surface of the (particularly each) shorter side of the surrounding wall 23 of the (particularly each) larger nut accommodating recess 21B while being spaced apart.

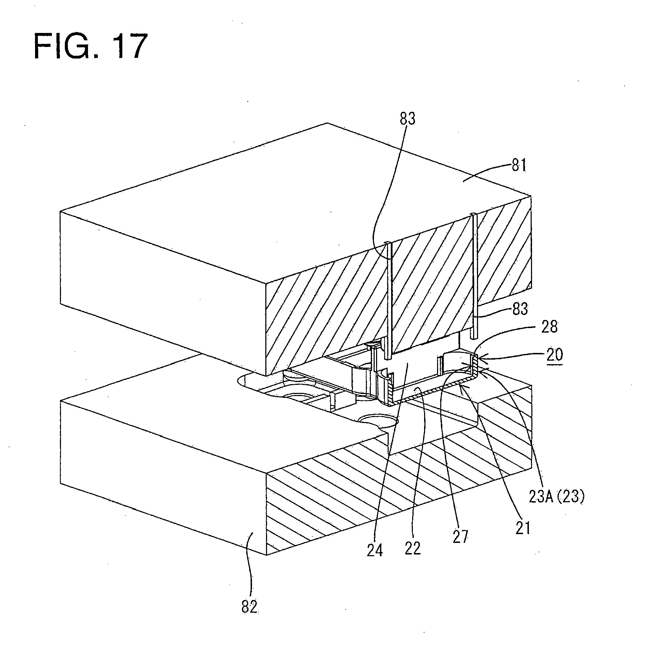

The pressing projection(s) 27 substantially vertically extend(s) and/or are formed over the substantially entire height of the outer surrounding wall(s) 23A. That is, the upper end or distal surfaces of the pressing projections 27 substantially are flush with those of the outer surrounding walls 23A as shown in FIG. 17. Further, the thickness of parts where the pressing projections 27 are provided particularly is larger than that of the other parts of the outer surrounding walls 23A by the thickness of the pressing projections 27.

At lest one first pressing surface 28 is formed by or on the upper end or distal surface of each pressing projection 27 and/or that of the outer surrounding wall 23A substantially flush with and adjacent to the former upper end or distal surface. Note that, in the first pressing surface 28, the upper end or distal surface of the surrounding wall 23 and that of the pressing projection 27 particularly are set to have substantially the same area.

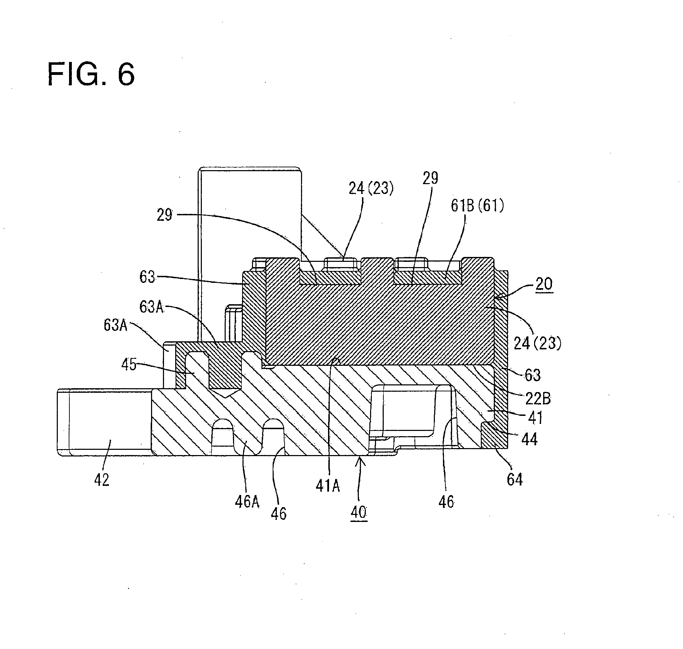

As shown in FIG. 8, one or more second pressing surfaces 29 (particularly substantially having a rectangular or polygonal plan view) are formed on the upper end or distal surface(s) of the partition wall(s) 24. As shown in FIGS. 6 and 13, the one or more second pressing surfaces 29 are formed by recessing the partition wall(s) 24, particularly the substantially opposite sides of a center of an upper end portion of each partition wall 24 in a long side direction.

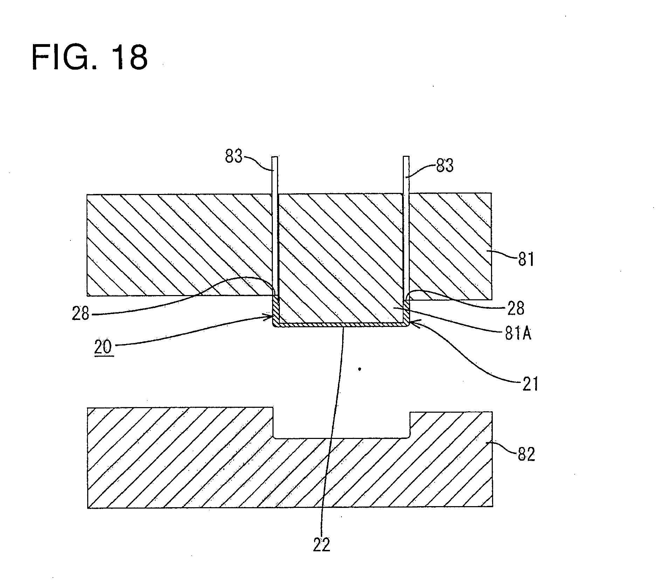

Further, as shown in FIGS. 17 and 18, the first and second pressing surfaces 28, 29 are surfaces to be pressed by one or more respective ejector pins 83 provided in one or more respective molds 81, 82 when the insulating plate 20 is separated from the molds 81, 82 after being formed by the molds 81, 82 that are vertically or relatively moved or displaced for molding opening. Specifically, the insulating plate 20 is formed by the first mold 81 arranged at one side (e.g. an upper side) and the second mold 82 arranged at another side (e.g. a lower side). The first mold 81 forms a first side (e.g. an upper surface side) of the insulating plate 20 and the second mold 82 forms s second side (e.g. a lower surface side) of the insulating plate 20. The insulating plate 20 is formed by at least partly injecting resin into a cavity formed by the first and second molds 81, 82, and completed by being separated from the first and second molds 81, 82 after this resin is cured.

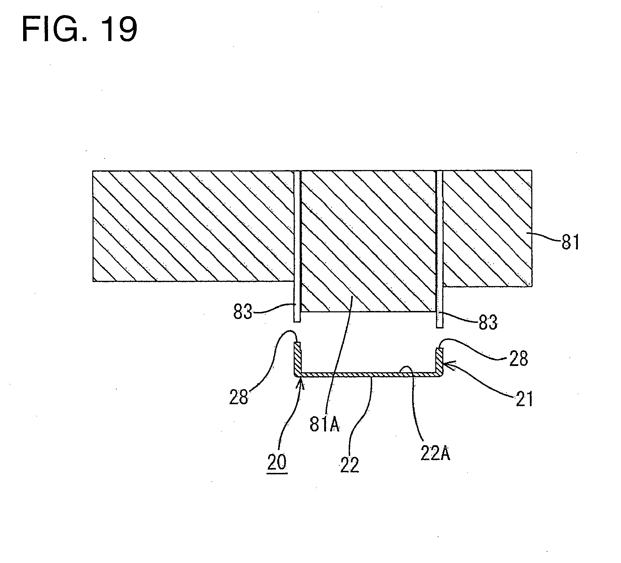

The one or more nut accommodating recesses 21 of the insulating plate 20 are formed by one or more accommodating-portion forming parts 81A provided in the first mold 81 and, when being cooled and cured, slightly contract and/or at least partly are fitted to the accommodating-portion forming parts 81A as shown in FIG. 18, wherefore it is difficult to demold the nut accommodating recesses 21. Thus, the one or more ejector pins 83 provided in the first mold 81 press the respective first and second pressing surfaces 28, 29, whereby the one or more nut accommodating recesses 21 are separated from the accommodating-portion forming parts 81A and the insulating plate 20 is separated from the first mold 81 as shown in FIGS. 17 and 19. In this way, the insulating plate 20 is separated from the first mold 81 by pressing the first and second pressing surfaces 28, 29 instead of the bottom plate 22, and is formed without leaving any indents caused by the ejector pins on the surface of the bottom plate 22. This can prevent air layers having lower thermal conductivity than metals, synthetic resins and the like from being formed between the nuts 10 and the bottom plates 22. Since the insulating plate 20 of this embodiment can be held in close contact with the nuts 10 and the bottom plate 22 in this way, heat transference from the nuts 10 to the insulating plate 20 can be improved.

Since particularly a plurality of first and second pressing surfaces 28, 29 are intermittently formed on the surrounding wall 23, forces of the ejector pins 83 are distributed among the plurality of first and second pressing surfaces 28, 29 and the bottom plate 22 of the insulating plate 20 can be prevented from being deformed when the insulating plate 20 is separated from the first mold 81.

Further, since the one or more first and second pressing surfaces 28, 29 are formed on respective parts of the upper end or distal surfaces of the surrounding walls 23 and/or those of the partition walls 24, it is not necessary to separately form pressing surfaces on the insulating plate 20 and it is possible to make the insulating plate 20 smaller and simplify the structure of the insulating plate 20.

Furthermore, since the synthetic resin used for the insulating plate 20 particularly has a content of glass and talc between about 50% and about 75% (e.g. of about 66 %), warping is more unlikely to occur after molding as compared to synthetic resin having a content of glass and talc of about 33 %. This enables the bottom plate 22 of the insulating plate 20 to be more closely held in contact with the nuts 20 and heat transference from the nuts 10 to the bottom plate 22 to be further improved.

One or more positioning ribs 25 projecting inwardly of the nut accommodating recess 21 are provided on the inner peripheral surface of the surrounding wall 23. These positioning ribs 25 substantially vertically extend straight and are formed substantially over the entire height of the outer surrounding walls 23A. The positioning ribs 25 provided on the partition wall 24 particularly are set to extend up to a substantially vertical central of the partition wall 24. Further, the projecting ends of the positioning ribs 25 can come into contact with the side surfaces of the nut 10 accommodated in the nut accommodating recess 21.

As shown in FIG. 8, two positioning ribs 25 particularly are provided on the inner surface at the (particularly at each of four) side(s) of the surrounding wall 23 in the (particularly each) smaller nut accommodating recess 21A while being spaced apart. Further, two positioning ribs 25 particularly are provided on the inner surface of each longer side of the surrounding wall 23 in the (particularly each) larger nut accommodating recess 21B while being spaced apart and/or three positioning ribs 25 particularly are provided on the inner surface of the (particularly each) shorter side thereof while being spaced apart. The positioning ribs 25 provided on the outer ones of the longer sides of the surrounding walls 23 in the smaller nut accommodating recesses 21A particularly are formed on side surfaces of or adjacent to the pressing projections 27 (particularly the first and/or second pressing surfaces 28, 29), and/or those provided on the shorter sides of the surrounding walls 23 in the smaller nut accommodating recesses 21A are formed on the pressing projections 27 (particularly the first and/or second pressing surfaces 28, 29). Further, a part (e.g. two) of the positioning ribs 25 provided on each shorter side of the surrounding wall 23 in each larger nut accommodating recess 21B are formed on side surfaces of the pressing projections 27 (particularly the first and/or second pressing surfaces 28, 29). In this way, the nuts 10 accommodated in the nut accommodating recesses 21 are more accurately positioned by a plurality of positioning ribs 25 as shown in FIG. 14.

Further, a bolt escaping recess or hole 26 is formed in (particularly a substantially central part of) the bottom plate 22 at least partly enclosed by the surrounding wall 23. As shown in FIGS. 5 and 8, this bolt escaping recess 26 makes a circular opening in the upper surface 22A of the bottom plate 22 and projects downward. Further, the inner surface shape of the bolt escaping recess 26 particularly is a bottomed recess extending downward or outward from the upper surface 22A of the bottom plate 22. The bottom plate 22 and the bolt escaping recesses 26 particularly are formed to have a substantially uniform thickness. Accordingly, as shown in FIGS. 9 and 10, each bolt escaping recess 26 particularly substantially has a cylindrical outer surface shape projecting downward or outward from the lower surface 22B of the bottom plate 22.

As shown in FIG. 5, this bolt escaping recess 26 substantially is arranged coaxially with the bolt tightening hole 11 of the nut 10 and the inner diameter thereof is slightly larger than that of the bolt tightening hole 11. This can prevent the nut 10 from interfering with the bottom plate 22 of the insulating plate 20 and/or prevent the insulating plate 20 from being broken by the bolt even when the bolt is screwed into the nut 10 and inserted through the bolt tightening hole 11.

The heat sink 40 particularly is produced of a material having a higher heat capacity than the remaining parts of the terminal block such as aluminum die-cast and particularly substantially shaped to be laterally long as shown in FIG. 11. The heat sink 40 includes a sink main body 41 on which the insulating plate 20 is to be placed, and a fixing portion 42 integrally or unitarily formed to the sink main body 41. The sink main body 41 particularly substantially is laterally long and the fixing portion 42 is formed to project from one longer side edge of the sink main body 41.

The insulating plate 20 is to be placed on an upper surface 41A of the sink main body 41. Further, the upper surface 41A of the sink main body 41 is flat and/or polished to have no irregularities. This enables the lower surface 22B of the bottom plate 22 of the insulating plate 20 and the upper surface 41A of the sink main body 41 to be held in close contact with the insulating plate 20 placed on the upper surface 41A of the sink main body 41 as shown in FIG. 5.

Further, the sink main body 41 is formed with one or more (e.g. five) accommodation recesses 43 particularly arranged substantially at equal intervals in the lateral direction. The accommodation recesses 43 make (particularly substantially circular) openings in the upper surface 41A of the sink main body 41 and are bottomed recesses extending downward or outward from the upper surface 41A of the sink main body 41 as shown in FIG. 5. The accommodation recesses 43 are so formed that the bolt escaping recesses 26 of the insulating plate 20 at least partly are fittable or insertable thereinto. Further, the bolt escaping recesses 26 at least partly are fitted or inserted in the accommodation recesses 43 with small clearances formed between the outer surfaces of the bolt escaping recesses 26 and the inner peripheral surfaces of the accommodation recesses 43. This enables the insulating plate 20 and the heat sink 40 to be assembled while being positioned with respect to each other by fitting the respective bolt escaping recesses 26 of the insulating plate 20 into the corresponding accommodation recesses 43.

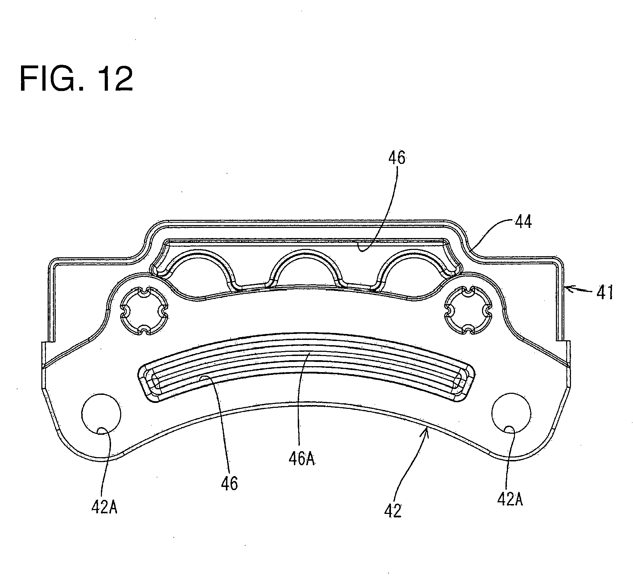

An outer edge stepped or lowered portion 44 formed somewhat above the lower surface of the sink main body 41 is formed at the outer peripheral edge of a lower end portion of the sink main body 41. As shown in FIG. 12, this outer edge stepped portion 44 is formed over at least part of the peripheral edge, particularly over the substantially entire outer peripheral edge except at a connected part of the sink main body 41 to the fixing portion 42.

The fixing portion 42 is formed to be laterally long along the side surface of the sink main body 41. Further, one or more vertically penetrating bolt insertion holes 42A are provided particularly at the substantially opposite lateral sides of the fixing portion 42. One or more (particularly substantially cylindrical) projections 45 (particularly having a substantially cylindrical shape) are provided to vertically extend from the upper surface of the fixing portion 42. As shown in FIG. 6, the cylindrical projections 45 are connected to the side surface of the sink main body 41 facing the fixing portion 42, and/or extend up to a position slightly above the upper surface 41A of the sink main body 41. Further, each cylindrical projection 45 particularly is or comprises a bottomed recess with an open upper side.

As shown in FIG. 12, one or more recesses 46 are formed in the lower surfaces of the sink main body 41 and/or the fixing portion 42. Out of these recesses, at lest one heat radiation fin 46A is formed in the recess of the fixing portion 42, and cooling water or fluid is or may be so circulated as to come into contact with this fin 46A. In this way, a heat radiation property from the heat sink 40 is improved by increasing the surface area of the lower surface of the heat sink 40 by the recess 46 and/or cooling the heat sink 40 by the heat radiation fin 46A.

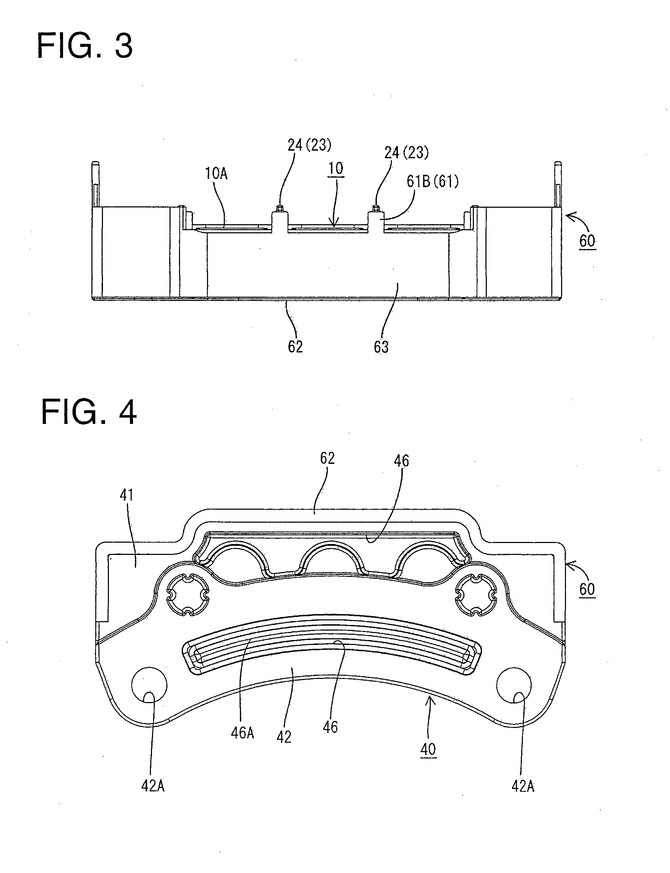

The molded resin part 60 is made e.g. of synthetic resin and, as shown in FIGS. 1 and 5, partly covers the nuts 10, the insulating plate 20 and the heat sink 40 with these assembled with each other. The molded resin part 60 includes an upper covering portion 61 to be held in close contact with the one or more stepped portions 12 of the one or more nuts 10 and/or the upper end portions of the surrounding walls 23 of the insulating plate 23, a lower fixing portion 62 to be held in close contact with the outer edge stepped portion 44 of the heat sink 40, and/or a side wall portion 63 to be held in close contact with the insulating plate 20 and the outer side surfaces of the sink main body 41 of the heat sink 40. Further, as shown in FIG. 3, the side wall portion 63 particularly is integrally or unitarily formed to the upper and lower covering portions 61, 62 so as to connect the upper and lower covering portions 61, 62.

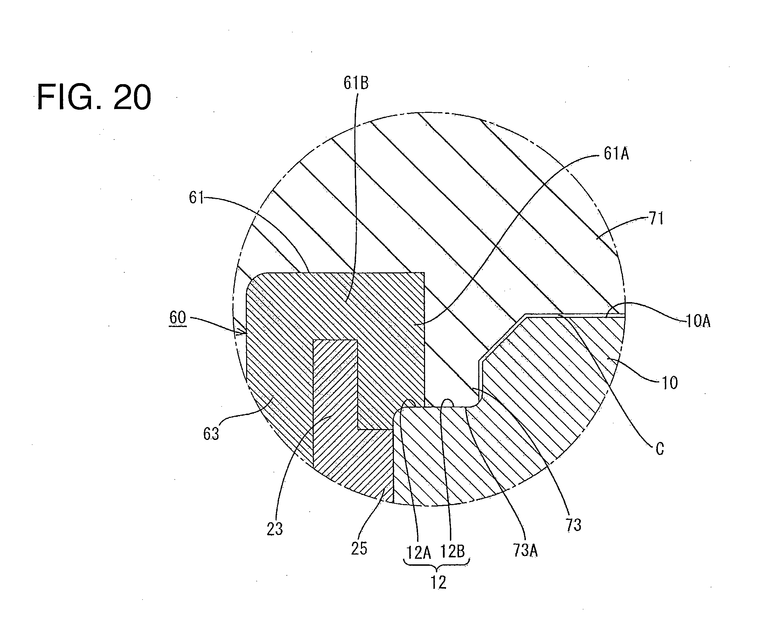

As shown in FIG. 5, the upper covering portion 61 includes one or more nut covering portions 61A at least partly covering the outer peripheral edges of the upper surfaces of the stepped portions 12 of the respective nuts 10 (particularly substantially over the entire peripheries) and/or one or more surrounding wall covering portions 61B covering the upper end portions of the surrounding walls 23. Partial surfaces of the stepped portions 12 covered by the nut covering portions 61A particularly are restricted surfaces 12A and to be held in close contact with the nut covering portions 61A as shown in FIG. 20. Further, the surrounding wall covering portions 61B are formed to at least partly cover the upper end or distal portions of the respective surrounding walls 23 particularly substantially over the entire peripheries except at parts of the partition walls 24. The respective nut covering portions 61A and the respective surrounding wall covering portions 61B particularly are integrally or unitarily formed, and/or the upper covering portion 61 particularly covers all the nuts 10 and surrounding walls 23. Note that, as shown in FIGS. 3 and 6, the parts of the partition walls 24 are exposed at the upper end surfaces of the surrounding wall covering portions 61B. That is, upward or outward movements of the nuts 10 particularly are prevented by covering the restricted surfaces 12A from above by the nut covering portions 61A. This enables the nuts 10 and the insulating plate 20 to be held in close contact while preventing lifting movements of the nuts 10 being pulled toward the bolts and/or preventing insulating or air layers having lower thermal conductivity than metals and synthetic resins from being formed between the nuts 10 and the insulating plate 20 when the bolts are tightened into the bolt tightening holes 11. Consequently, heat can easily escape from the nuts 10 to the heat sink 40 via the insulating plate 20 and heat-transfer performance of the terminal block can be improved.

Since the respective nut covering portions 61A and the respective surrounding wall covering portions 61B particularly are integrally or unitarily formed as shown in FIG. 5, rigidity of the upper covering portion 61 can be increased as compared with the case where they are separately formed.

As shown in FIGS. 4 and 5, the lower covering portion 62 is formed to cover the outer edge stepped portion 44 of the sink main body 41 of the heat sink 40 at least over a part thereof, particularly substantially over the entire range, from below. In this way, the molded resin part 60 particularly is so formed as to (particularly substantially vertically) sandwich the nuts 10, the insulating plate 20 and the heat sink 40 and/or hold the respective members 10, 20 and 40 in close contact with each other as shown in FIGS. 5 and 6. This particularly prevents the nut covering portions 61A from being lifted up together with the nuts 10 being pulled toward the bolts and keeps the nuts 10 and the insulating plate 20, the insulating plate 20 and the heat sink 40 in close contact, respectively.

Further, the upper covering portion 61 particularly is so formed as to substantially fill up the clearances between the inner peripheral surfaces of the surrounding walls 23 of the nut accommodating recesses 21 and the side surfaces of the nuts 10, thereby improving a degree of adhesion between the molded resin part 60, the nuts 10 and the insulating plate 20. This makes the nuts 10 held in close contact with the molded resin part 60 particularly substantially over the entire peripheries not only at the nut covering portions 61A, but also on the outer peripheral surfaces of the nuts 10, thereby further preventing upward movements of the nuts.

As shown in FIGS. 3 and 5, the side wall portion 63 particularly is formed to entirely cover the side surfaces of the insulating plate 20 and/or the side surfaces of the sink main body 41 of the heat sink 40 between the upper covering portion 61 and the lower covering portion 62. As shown in FIG. 6, the side wall portion 63 is provided with one or more projection covering portions 63A which at least partly cover the cylindrical projections 45 of the heat sink 40. The projection covering portions 63A particularly are formed to fill up the interiors of the cylindrical projections 45 and entirely cover the upper surfaces and side surfaces of the cylindrical projections 45, thereby improving a degree of adhesion between the molded resin part 60 and the heat sink 40.

The terminal block of this embodiment is structured as described above. Next, a method for manufacturing the molded resin part 60 is described.

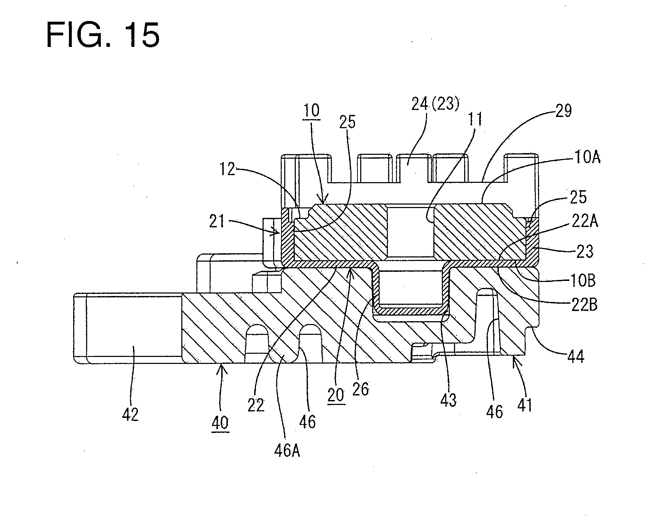

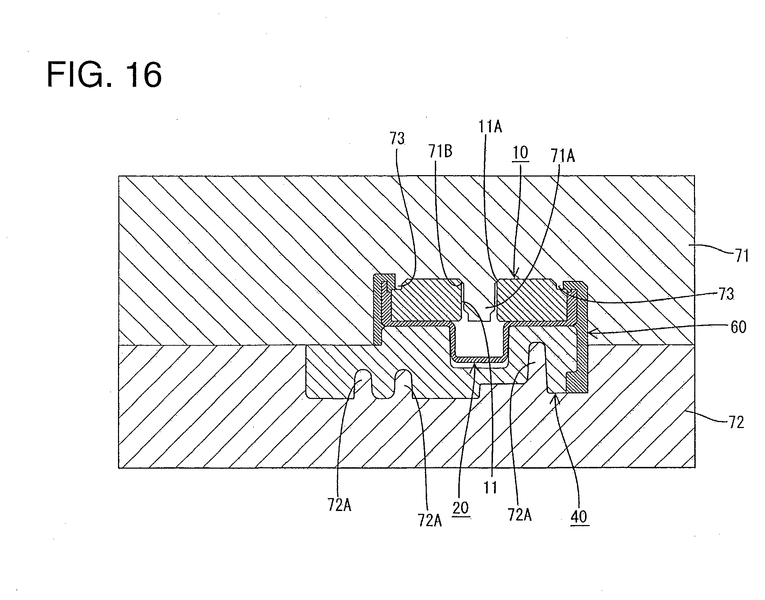

First, the one or more nuts 10 are at least partly accommodated in the respective one or more nut accommodating recesses 21 of the insulating plate 20 and the one or more bolt escaping recesses 26 of the nut accommodating recesses 21 at least partly are fitted into the respective one or more accommodation recesses 43 of the heat sink 40, whereby the nuts 10, the insulating plate 20 and the heat sink 40 are respectively assembled while being positioned as shown in FIGS. 14 and 15 and set in first and second block molds 71, 72, which are vertically or relatively moved for mold opening, as shown in FIG. 16. At this time, three kinds of members 10, 20, 40 have upper parts supported by the first block mold 71 and lower parts supported by the second block mold 72. Further, the first block mold 71 forms the upper or first covering portion 61 of the molded resin part 60 and/or an upper or first part of the side wall portion 63 and the second block mold 72 forms the lower or second covering portion 62 and/or a lower or second part of the side wall portion 63.

The first block mold 71 includes one or more resin cut-off parts 73 which press the respective one or more nuts 10 from above. The (particularly each) resin cut-off part 73 particularly substantially has a shallow cylindrical or rounded shape. As shown in FIGS. 16 and 20, the leading end of each resin cut-off part 73 serves as a leading end surface 73A which is arranged at an angle different from 0° or 180°, preferably substantially perpendicular to a mold opening direction of the first block mold 71 and can come into surface contact with the upper surface of the stepped portion 12 of the nut 10. A thickness of the leading end surface 73A of the resin cut-off part 73 particularly is set to be smaller than a depth (length between a side surface located above the stepped portion 12 and a side surface located below the stepped portion 12) of the stepped portion 12 of the nut 10.

The resin cut-off parts 73 are so set as to support the one or more respective nuts 10 from above by pressing one or more press surfaces 12B, which are central or intermediate parts of the stepped portions 12 of the nuts 10, from above particularly substantially over the entire peripheries when the nuts 10, the insulating plate 20 and the heat sink 40 are set in the first and second block molds 71, 72.

When being set in the first and second block molds 71, 72, the one or more nuts 10 particularly are pressed only by the resin cut-off parts 73 and/or small clearance(s) C is/are formed between the first block mold 71 and the upper fastening surface(s) 10A of the nut(s) 10 and/or between the inner peripheral surface(s) of the resin cut-off part(s) 73 and the side surface(s) of the nut(s) 10 as shown in FIG 20. This can prevent the upper fastening surface(s) 10A of the nut(s) 10 from being brought into contact with the first block mold 71 and particularly being damaged by the first block mold 71. Further, since the clearances C are formed, the leading end surface(s) 73A of the resin cut-off part(s) 73 can be brought into surface contact with the upper surface(s) of the stepped portion(s) 12 of the nut(s) 10 even when the nut(s) 10 is/are slightly horizontally displaced with respect to the resin cut-off part(s) 73. Thus, displacements of the nuts 10 can also be dealt with.

On the other hand, the second block mold 72 particularly is set to support the heat sink 40 while positioning the heat sink 40 by being fitted into the recess 46 formed in the lower surface of the heat sink 40.

Since the surface of the bottom plate 22 of the insulating plate 20 particularly is formed not to have even small irregularities, three kinds of members 10, 20, 40 can be so set in the first and second block molds 71, 72 that the lower fastening surfaces 10B of the nuts 10 and the upper surface 22A of the bottom plate 22, and the lower surface 22B of the bottom plate 22 and the upper surface 41A of the sink main body 41 of the heat sink 40 are held in close contact with each other.

Further, since the nuts 10, the insulating plate 20 and the heat sink 40 are respectively positioned, they can be set in the first and second block molds 71, 72 without being displaced. Specifically, the heat sink 40 is positioned in or with respect to the second block mold 72 by at least partly inserting a positioning projection 72A of the second block mold 72 into the recess 46 of the heat sink 40 as shown in FIG. 16. Further, since the insulating plate 20 particularly is positioned on the heat sink 40 and the nuts 10 are positioned on the insulating plate 20, it can be prevented that one or more positioning pins 71A are largely displaced from the bolt tightening holes 11 to break the nuts 10 and the positioning pins 71A when the positioning pins 71A of the first block mold 71 are at least partly inserted into the bolt tightening holes 11 of the nuts 10 from above. Note that the one or more nuts 10 are to be at least partly accommodated in a slightly loose state in the nut accommodating portions or recesses 21 before being fixed by the positioning pins 71A. When the first and second block molds 71, 72 are closed, slight relative displacements of the positioning pins 71A and the bolt tightening holes 11 of the nuts 10 are or can be corrected so that the nuts 10 are fixed to the positioning pins 71A by locating taper surfaces 11A provided at the upper inner peripheral edges of the bolt tightening holes 11 of the nuts 10 at inclined surfaces 71B provide at the positioning pins 71A as shown in FIG. 16.

Subsequently, in the above state, resin at least partly is injected into a cavity formed by the first and second block molds 71, 72 to form the molded resin part 60 as shown in FIG. 16. At this time, the nut(s) 10 particularly is/are pressed only by the leading end surface(s) 73A of the resin cut-off part(s) 73 in this embodiment. Thus, when a mold clamping force of the first block mold 71 acting on the second block mold 72 is constant, contact pressure(s) between the resin cut-off part(s) 73 and the stepped portion(s) 73 can be increased by as much as contact areas are made smaller as compared to contact pressures when the entire upper fastening surface(s) 10A of the nut(s) 10 is/are pressed by the resin cut-off part(s) 73. This enables the flow of the resin to be easily cut off at boundary parts between the leading end surface(s) 73A of the resin cut-off part(s) 73 and the press surface(s) 12B of the stepped portion(s) 12 without increasing the mold clamping force and/or formation of resin films on the upper fastening surface(s) 10A of the nut(s) 10 to be prevented.

Since the leading end surface(s) 73A of the resin cut-off part(s) 73 and the press surface(s) 12B of the stepped portion(s) 12 of the nut(s) 10 particularly are in surface contact, the flow-in of the resin can be made more difficult by as much as the thickness of the resin cut-off part(s) 73 and/or formation of resin films on the upper fastening surface(s) 10A of the nut(s) 10 can be prevented.

Even if a clearance is formed at the boundary part between the press surface 12B of the stepped portion 12 and the leading end surface 73A of the resin cut-off part 73 e.g. due to a processing error of the nut 10 or the like and the resin flows into this clearance, the flow of the resin to the upper fastening surface 10A of the nut 10 can be easily restricted since the upper surface of the stepped portion 12 is located slightly below the upper fastening surface 10A of the nut 10.

Since the side surface(s) of the nut(s) 10 particularly can be held in contact only with the positioning rib(s) 25 on the inner peripheral surface(s) of the surrounding wall(s) 23 of the insulating plate 20, one or more clearances are formed between the inner peripheral surfaces of the surrounding wall(s) 23 and the side surface(s) of the nut(s) 10 and the resin substantially can flow into these clearances. This enables the nuts 10 and the insulating plate 20 to be fixed without any backlash by holding the nuts 10, the insulating plate 20 and the molded resin part 60 in closer contact.

Finally, when the resin is cured, the first and second block molds 71, 72 are vertically or relatively moved toward the substantially opposite sides for mold opening, whereby the terminal block of this embodiment is completed.

As described above, according to the terminal block of this embodiment, the contact pressures between the resin cut-off part(s) 73 and the stepped portion(s) 12 particularly can be increased and/or the flow of the resin particularly can be easily cut off at the boundary parts between the resin cut-off part(s) 73 and the stepped portion(s) 12 without increasing the mold clamping force since the resin cut-off part(s) 73 press(es) only the press surface(s) 12B of the stepped portion(s) 12.

Even if a clearance is formed at the boundary part between the stepped portion 12 and the resin cut-off part 73 and the resin flows into this clearance, the flow of the resin to the upper fastening surface 10A of the nut 10 particularly can be prevented since the upper surface of the stepped portion 12 is set at the position slightly lower than the upper fastening surface 10A of the nut 10. This can reliably prevent formation of the resin film on the upper fastening surface 10A of the nut 10 and/or improve heat radiation performance of the busbars and the terminal block by efficiently transferring heat of the busbars to the nuts 10.

Further, since the restricted surface(s) 12A of the stepped portion(s) 12 of the nut(s) 10 particularly is/are covered from above by the upper covering portion 61 of the molded resin part 60, lifting movements of the nut(s) 10 are prevented and the nut(s) 10 and the insulating plate 20 can be held in close contact when the bolts are tightened into the nuts 10. Therefore, heat-transfer performance of the terminal block can be further improved.

Further, by particularly at least partly covering the outer peripheral edge part(s) of the stepped portion(s) 12 pressed by the resin cut-off part(s) 73 by the upper covering portion 61 of the molded resin part 60, the shape of the nuts 10 can be simplified as compared with the case where the press surfaces 12B to be pressed by the resin cut-off parts 73 and the restricted surfaces 12A to be covered from above by the upper covering portions 61 are separately formed.

Accordingly, to ensure adhesion between a nut and conductors and improve heat radiation performance of a terminal block by preventing a resin film from being formed on a fastening surface of the nut, a terminal block in which conductors are placed one over another and fastened by at least one bolt is provided with one or more nuts 10, part of which or each of which with a stepped or lowered or recessed portion 12 slightly recessed and formed at an outer peripheral part of an upper or outer fastening surface 10A, on which the conductors are to be placed; a heat sink 40 arranged below the nut(s) 10; an insulating plate 20 sandwiched between the nut(s) 10 and the heat sink 40; and a molded resin part 60 by which three kinds of members 10, 20, 40 are integrally formed. The stepped portion(s) 12 is/are pressed by resin cut-off part(s) 73 provided in a first block mold 71 for forming an upper side of the molded resin part 60 when the molded resin part 60 is formed. One or more restricted surfaces 12A at outer peripheral side(s) of press surface(s) 12B to be pressed by the resin cut-off part(s) 73 on the stepped portion(s) 12 is/are covered by the molded resin part 60.

### <Other Embodiments>

The present invention is not limited to the above described and illustrated embodiment. For example, the following embodiments are also included in the technical scope of the present invention.
(1) Although the nut 10 is in the form of a block having a substantially rectangular plan view in this embodiment, the present invention is not limited to such a mode. For example, the nut may be formed to have a substantially cylindrical or polygonal shape.
(2) Although the lower surface of the heat sink 40 is covered by the lower covering portion 62 of the molded resin part 60 in this embodiment, the present invention is not limited to such a mode. For example, a recess may be formed in the side surface of the heat sink 40 and a locking portion to be engaged with this recess may be provided on the molded resin part 60.
(3) Although the leading end surfaces 73A of the resin cut-off parts 73 and the press surfaces 12B of the stepped portions 12 of the nuts 10 are horizontal surfaces substantially perpendicular to the mold opening direction of the mold in this embodiment, the present invention is not limited to such a mode. For example, the leading end surfaces of the resin cut-off parts and the press surfaces 12B of the stepped portions 12 of the nuts 10 may be oblique surfaces or surfaces arranged at an angle different from 0° or 180° to the mold opening direction of the mold.

### LIST OF REFERENCE NUMERALS

10: nut
10A: upper fastening surface (fastening surface)
12: stepped portion.
12A: restricted surface
12B: press surface
20: insulating plate
40: heat sink
60: molded resin part
61: upper covering portion
62: lower covering portion
63: side wall portion
71: first mold (mold)
72: second mold (mold)
73: resin cut-off part
73A: leading end surface
C: clearance

## Claims

1. A terminal block for fastening conductors by placing the conductors one above another and fastening bolts, comprising a plurality of nuts (10) on which the conductors are to be placed and a partition wall (24) partitioning between the nuts (10) adjacent to each other, wherein the partition wall (24) extends in a direction crossing an arrangement direction of the nuts (10) and includes
an insulation wall made of primary molding resin, located at least in a range in a vertical direction from the lower surfaces of the nuts (10) to the upper surfaces of the bolts to be fastened to the nuts (10) and insulating between the adjacent nuts (10), and
a secondary molding portion (60) made of secondary molding resin, filling up clearances between the insulation wall and the nuts (10) and at least partly covering the side surface of the insulation wall.

2. A terminal block according to claim 1, wherein at least one exposed portion, which is an exposed part of a projecting portion projecting upward from the upper end of the insulation wall, is provided on the upper surface of the secondary molding portion (60).

3. A terminal block according to any one of the preceding claims, wherein the secondary molding portion (60) covers the side surface of the insulation wall over the substantially entire circumference.

4. A terminal block according to claim 2 or 3, wherein a plurality of exposed portions are arranged in the direction crossing the arrangement direction of the nuts (10) on the upper surface of the secondary molding portion (60).

5. A terminal block according to any one of the preceding claims, wherein an inclined portion at least partly covering a base end portion of the exposed portion is formed on the upper surface of the secondary molding portion (60).

6. A terminal block according to claim 5, wherein the inclined portion covers a base end portion of the exposed portion over the entire circumference.

7. A terminal block according to claim 5 or 6, wherein the inclined portion is configured such as to follow deformation of the exposed portion in order to be held in close contact with the base end portion of the exposed portion when an external force acts on the exposed portion.

8. A terminal block according to any one of the preceding claims, further comprising a heat sink (40) to be arranged on one side of the nut(s) (10) substantially opposite to another side where the conductor(s) is/are to be placed and an insulation plate (20) to be sandwiched between the nut(s) (10) and the heat sink (40) from opposite sides.

9. A terminal block according to claim 8, wherein the secondary molding portion (60) at least partly covers the nut(s) (10), the insulation plate (20) and the heat sink (40).

10. A terminal block according to claim 8 or 9, wherein the secondary molding portion (60) includes:
an upper covering portion (61) to be held in close contact with the nut(s) (10) and/or upper end portion(s) of surrounding wall(s) (23) of the insulation plate (20),
a lower covering portion (62) to be held in close contact with a sink body (41) of the heat sink (40), and/or
a side wall portion (63) to be held in close contact with the outer side surface(s) of the insulation plate (20) and/or the sink body (41) of the heat sink (40).

11. A terminal block according to claim 10, wherein the upper covering portion (61) is so formed as to fill up the clearances between the inner peripheral surfaces of the surrounding wall (23) of the nut accommodating recess (21) and the side surface of the respective nut (10).

12. A terminal block according to claim 10 or 11, wherein the upper covering portion (61) comprises one or more surrounding wall covering portions (61B) at least partly covering the upper surface(s) of the surrounding wall(s) (23).

13. A terminal block according to any one of the preceding claims, wherein nut accommodating recesses (21) are provided which are substantially arranged side by side and into which the nuts (10) can be at least partly accommodated, wherein a creepage distance capable of providing electrical insulation between the adjacent nut accommodating recesses (21) particularly is ensured only by the insulation wall(s).
